# EUROPEAN PATENT APPLICATION

(11) **EP 0 985 962 A1**
(43) Date of publication of application: **15.03.2000**
(21) Application number: 99117827.8
(22) Date of filing: 09.09.1999
(51) Int. Cl.: G03B 31/06, G06K 19/077

(54) **Information reproducing system, information recording medium, and information recording system**

(30) Priority: 11.09.1998 JP 25891298
(71) Applicant: SONY CORPORATION, Tokyo (JP)
(72) Inventor: Miyai, Seiichi, Shinagawa-ku, Tokyo (JP); Imagawa, Toshiyuki, Shinagawa-ku, Tokyo (JP)
(74) Representative: MÜLLER & HOFFMANN Patentanwälte

(57) **Abstract**

The present invention relates to an information reproducing system, an information recording medium, and an information recording system, and for example, is applied to a photographic seal, enabling the recording of various kinds of information related to an image together by displaying a photograph on the information recording medium as well as recording audio data in the information recording medium.

## Description

### BACKGROUND OF THE INVENTION

### Field of the Invention

The present invention relates to an information reproducing system, an information recording medium, and an information recording system, and for example, is applied to a photographic seal. The present invention enables recording various kinds of information related to an image together with simple structure by displaying a photographic image on the information recording medium as well as recording audio data and so on in the information recording medium.

### Description of the Related Art

Conventionally, a facial portrait is provided by using a photographic seal called silver salt picture, what is called, print club (manufactured by SEGA, ATLUS Co., Ltd.) Here, the print club is referred to as a photographic seal made by printing a facial portrait and so on a adhesive seat.

However, this kind of a photographic seal consists of image information only and thus such a problem occurs that information on photographed person names and a group to which the persons belong and so on must be recorded in another method, for example, by handwriting to a mount or suchlike.

Incidentally, in case of no record by such handwriting, many person names and suchlike must be remembered by memorizing them during the classification and management of the persons' facial portraits by pasting them on a mount or suchlike. As a result, it is therefore difficult to obtain accurate information from photographic seals. Further, recording information by handwriting is a troublesome chore and handwritten data looks disordered.

Further, there are some photographic seals on which date of photographing, characters and suchlike can be recorded; however, information such as characters is recorded in a limited partial image area on such seals, which causes such a problem that only the limited amount of information can recorded.

### SUMMARY OF THE INVENTION

The present invention has been provided to eliminate the above mentioned problem to propose an information recording medium capable of recording various kinds of information related to images together with simple configuration and an information reproducing system and an information recording system for the information recording medium.

To solve the problem, according to one aspect of the present invention, in an information reproducing system, an information recording medium comprises a photographic image to be displayed on the surface, a medium-side antenna for receiving control commands transmitted from the an information reproducing apparatus, and a medium-side processing circuit for transmitting information accompanying the photographic image recorded in memory through medium-side antenna according to the control commands received through the medium-side antenna, and an information reproducing apparatus comprises a reproducing-side antenna for transmitting the control commands to the information recording medium as well as receiving information accompanying the photographic image transmitted from the information recording medium, a reproducing-side processing circuit for processing information accompanying the photographic image received through the reproducing-side antenna, and information output means for outputting information accompanying the photographic image processed by the reproducing-side processing circuit.

According to another aspect of the present invention, an information recording medium comprises an image display area provided on the surface to display a photographic image, a medium-side antenna for receiving control the commands transmitted from the information reproducing apparatus, and a medium-side processing circuit for transmitting information accompanying the photographic image recorded in memory according to the control commands received through the medium-side antenna.

According to another aspect of the present invention, in an information recording system, an information recording medium comprises an image display area provided on the surface to display a photographic image, a medium-side antenna for receiving the control commands transmitted from the information recording apparatus, and a medium-side processing circuit for recording information received through the medium-side antenna according to the control commands received through the medium-side antenna and an information recording apparatus comprises image obtaining means for obtaining the photographic image to be displayed in the image display area, image display means for display in the image display area the photographic image obtained through the image obtaining means, information obtaining means for obtaining information accompanying the photographic image, and an apparatus-side antenna for transmitting control commands and information accompanying the photographic image.

According to one configuration of the present invention, information accompanying the photographic image displayed on the surface of the information recording medium can be reproduced from this information recording medium in the method of non-contact.

According to another configuration of the present invention, a photographic image is displayed on the surface and the information accompanying the photographic image is recorded in memory and thus can be transmitted in the method of non-contact.

According to another configuration of the present invention, a photographic image is displayed on the surface of the information recording medium and information accompanying the photographic image can be recorded in the memory of the information recording medium.

### BRIEF DESCRIPTION OF THE DRAWINGS

Figs. 1A and 1B are sectional views of a photographic seal mount which is applied to the information processing system according to the first embodiment of the present information.
Fig. 2 is a block diagram showing the information processing system according to the first embodiment of the present information.
Fig. 3 is a block diagram showing the information recording apparatus in Fig. 2.
Fig. 4 is a block diagram showing the information reproducing apparatus in Fig. 2.
Fig. 5 is a plan view of the information reproducing apparatus according to the second embodiment of the present invention.
Fig. 6 is a perspective view of the information reproducing apparatus according to the third embodiment of the present invention.
Fig. 7 is a plan view of the photographic seal according to the fourth embodiment of the present invention.

### DETAILED DESCRIPTION OF THE PREFERRED EMBODIMENTS

### (1) First embodiment

### (1-1) Configuration of the first embodiment

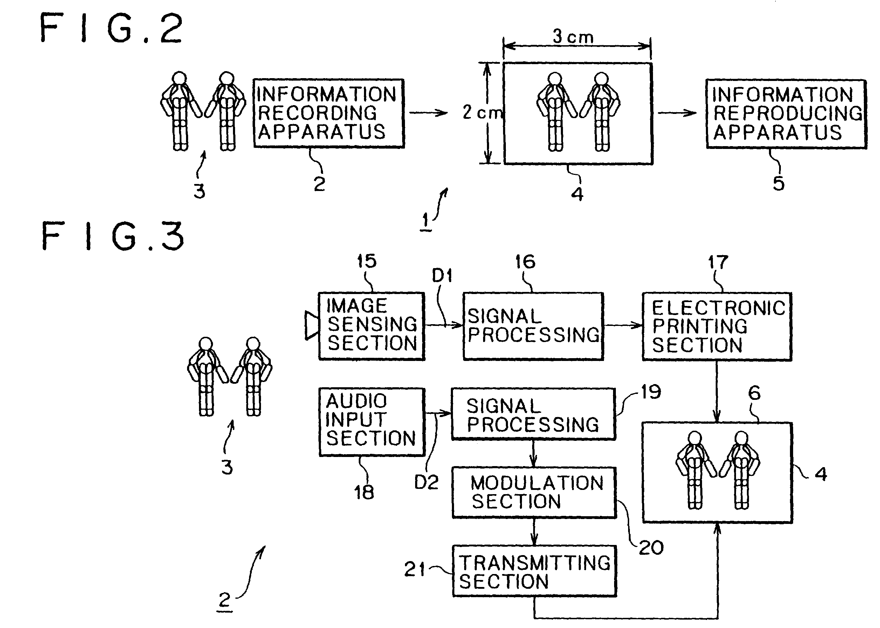

Fig. 2 is a block diagram showing the configuration of the information processing system according to the first embodiment of the present invention. The information processing system 1 obtains the image and voice of a desired object 3 and creates a photographic seal 4. Further, the voice recorded in the photographic seal is reproduced using an information reproducing apparatus 5 at home or suchlike.

Here, the photographic seal 4 is manufactured by forming a photographic image on the surface of the photographic seal mount by printing and recording a voice in the photographic seal mount. In this embodiment, the photographic seal 4 is 2 cm wide, 3 cm long, and 0.5 mm thick.

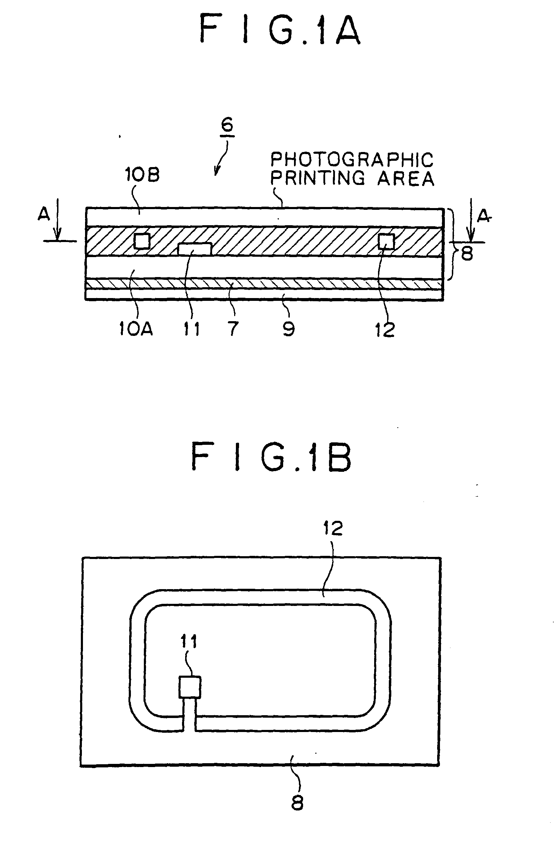

As a sectional view is shown in Fig. 1, a photographic seal mount 6 is manufactured by applying adhesive 7 such as pressure sensitive adhesive to the back of an IC card 8 and pasting a peelable release-type sheet 9 on the back of the IC card 8. In the photographic seal mount 6, the opposite surface to the surface to which the adhesive 7 is applied is allocated to a photographic image printing area. In the photographic seal mount 6, a photographic image is printed on the photographic image printing area with an information recording apparatus 2 and is designed to record the image of an object 3.

Here, the IC card 8 is an IC-contained card-shaped information recording medium and is configured so that desired data can be inputted and outputted by non-contact. In other words, the IC card 8 is manufactured by holding an IC chip 11 and an antenna 12 in a sandwiched manner with a pair of substrates 10A and 10B made of a polyester film and sealing them.

Here, as the section indicated by a line A-A is shown in Fig. 1B, in the IC card 8, the antenna 12 is formed in a loop, and the integrated circuit of the IC chip 11 is operated with electric current induced by the antenna 12. During the operation, the integrated circuit accepts the commands to be outputted by the information recording apparatus 2 or information reproducing apparatus 5 via the antenna 12. Further, according to these commands, subsequently inputted audio data is demodulated and the demodulated data is recorded in built-in memory. On the contrary, according to the commands, the audio data recorded in memory is modulated and the modulated data is transmitted through the antenna 12. The integrated circuit is designed so that approx. 30-second audio data can recorded because the memory capacity of the integrated circuit is 8K bytes.

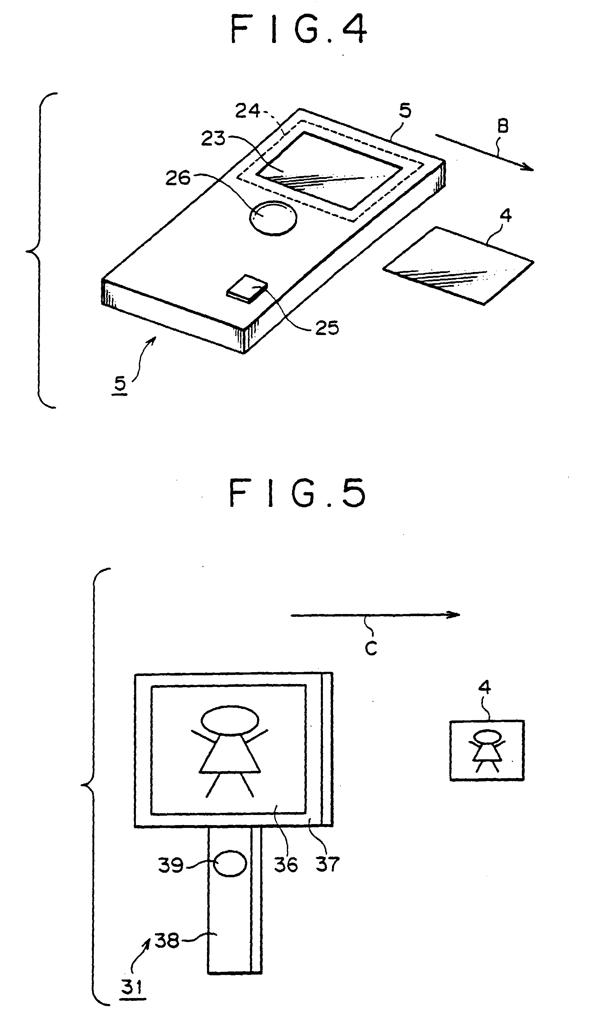

Fig. 3 is a block diagram showing the information recording apparatus 2 in detail. An image sensing section 15 comprising, for example, a video camera images an object 3 and outputs image data D1. A signal processing circuit 16, when a specific operator is operated, selectively obtains one screen of image data D1 and holds the data in memory. Further, the signal processing circuit 16 displays an image based on the obtained image data. When the operation of confirmation is acquired by the user, the signal processing circuit 16 outputs the image to an electronic printing section 17.

In the electronic printing section 17, the photographic seal 6 described above in Fig. 1 is supplied by a specific carrier mechanism, and a photographic image of the object 3 sensed by the image sensing section based on the image data D1 outputted by the information processing circuit 16 is printed on the photographic seal mount 6.

An audio input section 18 obtains the audio signal of an object 3 via a microphone and outputs audio data D2. A signal processing circuit 19 records the audio data D2 in memory for a specific time and further outputs the recorded audio data D2 through a speaker not shown in synchronism with the processing of the signal processing circuit 16. Further, the signal processing circuit 19, when the confirmation can be obtained by the user, compresses the audio data and outputs the compressed data to a modulating section 20 in synchronism with the processing of the signal processing circuit 16.

The modulating section 20 modulates the compressed audio data using a carrier signal with a frequency of 13.66 MHz and outputs a modulation signal which is the result of the modulation. A transmitting section 21 drives a specific coil according to the modulation signal. Here, in the information recording apparatus 2, when a photographic image is printed on the photographic seal mount 6 by the electronic printing section 17, the photographic seal mount is disposed in a specific position, where the coil driven by the transmitting section 21 is connected to the antenna 12 of the photographic seal mount 6.

The information recording apparatus 2 outputs the record command from a control circuit not shown to the modulation section 20, transmits the record command to the photographic seal mount 6, and then subsequently transmits the audio data held in the processing circuit 19 to the photographic seal mount 6, thereby the voice of the object is recorded to the photographic seal mount 6.

Fig. 4 is a perspective view showing the information reproducing apparatus 5. The information reproducing apparatus 5 is comprised of an approx. rectangular plate shape and, as shown by an arrow B, is used by bringing the apparatus close to the overhead of the photographic seal 4 pasted on a pocketbook or suchlike after peeling a release-type sheet.

In other words, a window 23 is formed on the top of the information reproducing apparatus 5, which is designed so that the photographic seal 4 under the window 23 can visually be checked through the window 23, thereby the information reproducing apparatus 5 is designed so that a target photographic seal 4 to be processed can be specified and positioned.

Further, a loop antenna 24 is disposed in the information reproducing apparatus 5 so as to surround the window 23. In he information reproduction 5, operating a push-button type operator 25 modulates a reproduce command with a modulation circuit not shown to drive the antenna 24, thereby the information reproducing apparatus 5 transmits the reproduce command to the photographic seal 4 specified through the window 23.

As described above, when the information reproducing apparatus 5 transmits the reproduce command, the apparatus subsequently detects a high-frequency signal induced by the antenna 24, thereby the apparatus 5 receives the audio data transmitted from the photographic seal 4. The information reproducing apparatus 5 expands the audio data with the signal processing circuit and then converts the expanded audio data to an analog signal to drive the speaker 26. Thereby, the information reproducing apparatus 5 is designed so that the voice recorded in the photographic seal 4 identified through the window 23 can be listened to.

### (1-2) Operation of the first embodiment

In the above configuration, in the information processing system 1 (Figs. 1 and 2), the surface of the photographic seal mount 6 of the IC card 8 is allocated to the photographic image printing area, and in the information recording apparatus 2, the image of the object 3 obtained via the image sensing section 15 is recorded in this area by printing. Further, the voice obtained via the audio input section 18 is transmitted to the photographic seal mount 6 based on the audio data format, and the audio data received through the antenna 12 is recorded in the built-in memory of the photographic seal mount 6.

In the information processing system 1, in such a way, a photographic seal 4 is created by recording a voice and forming an image on the photographic seal 4, thereby an image and various kinds of information related to the image can be recorded together by producing a speech of a personal name, a group to which a person belong, a place of photographing, date of photographing and suchlike during photographing. Further, audio data can be recorded by non-contact, thus improving the reliability of the data.

The thus created photographic seal 4 is classified and managed by peeling a release-type seat 9 from the back and pasting the seal on, for example, a pocketbook.

In such a state, the image printed on the photographic seal 4 can visually be checked. Further, after bringing the information reproducing apparatus 5 as shown in Fig. 4 and roughly positioning the seal 4 so as to visually check the image through the window 23, the reproduce command is received with the photographic seal 4 via the antenna 24 by operating the operator 25. Thereby, the audio data recorded in the photographic seal 4 is transmitted to the information reproducing apparatus 5, converted to an analog signal, and then outputted from the speaker 26.

In such a manner, an image and a voice related to the image can be checked from the photographic seal 4 by easy operation with the photographic seal 4 pasted on a pocketbook or suchlike for management.

### (1-3) Effect of the first embodiment

According to the above configuration, an image and voice information related to the image can be recorded together by indicating a photographic image in the information recording medium of an IC card by printing and recording audio data.

### (2) Second embodiment

Fig. 5 is a plan view of the information reproducing apparatus according to the second embodiment of the present invention. The information reproducing apparatus 31 is configured so as to be also used as a magnifying glass. That is, in the information reproducing apparatus 31, the rectangular convex lens 36 for magnifying an image is supported by a frame body 37. In the information reproducing apparatus 31, a grip 38 is formed for the frame body 37, thereby an image can be observed by bringing the information reproducing apparatus 31 close to the overhead of the photographic seal 4 as indicated by an arrow C with holding the grip 38 and magnifying the image indicated on the photographic seal 4 with the convex lens 36.

A loop antenna is built in the frame body 37 of the information reproducing apparatus 31, and further a specific signal processing circuit and suchlike are disposed in the grip 38. In the information reproducing apparatus 31, the loop antenna is driven by operating the operator disposed in the grip 38 to transmit a reproduce command to the photographic seal 4. Subsequently, the high-frequency signal induced by the loop antenna is signal-processed to obtain the audio data transmitted from the photographic seal 4 and the audio data is outputted from the speaker 39.

According to the configuration shown in Fig. 5, the information reproducing apparatus is configured so that it can also be used as a magnifying glass and the information reproducing apparatus becomes more easier to handle than the first embodiment of the present invention.

### (3) Third embodiment

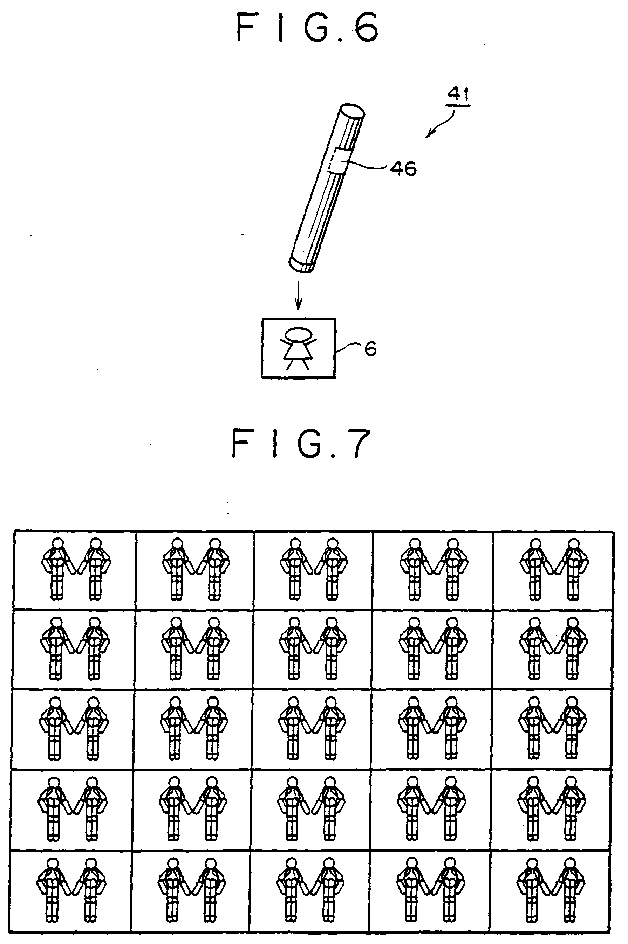

Fig. 6 is a perspective view of the information reproducing apparatus 31 according to the third embodiment of the present invention. The information reproducing apparatus 41 is configured so that the whole shape is a bar. In other words, a cylindrical air core coil is disposed at the end of the information reproducing apparatus 41, thereby the air core coil is connected to the antenna 12 of the photographic seal 4 when the tip is brought close to the photographic seal 4, thus allowing transmitting and receiving control commands or suchlike.

The information reproducing apparatus 41 drives the air core coil to transmit a reproduce command to the photographic seal 4 and obtains audio data transmitted from the photographic seal 4. The information reproducing apparatus 41 converts the audio data to an analog signal and outputs the signal from the audio output section 46 disposed in the side of the information reproducing apparatus 41.

According to the configuration shown in Fig. 6, by configuring the information reproducing apparatus into a bar, the voice recorded in the photographic seal 4 can be reproduced by pointing the photographic seal 4 as if using a ball-point pen.

### (4) Other embodiments

In the above described embodiments, the creation of photographic seals one by one was described, however, to which the present invention is not limited. As shown in Fig. 7, for example, a photographic seal mount comprise 5 by 5 multiple photographic seals and thus such configuration may be used that a plurality of photographic seals are printed simultaneously.

In the above described embodiments, the reproduction of the voice recorded in the photographic seal simply at the information reproducing apparatus was described, however, to which the present invention is not limited. In addition to this, a voice re-recording function, a voice additionally recording function, and so on may be added, thereby the information reproducing apparatus can become much more easier to handle.

In the above described embodiments, the transmission and reception of data via an antenna by non-contact was described, however, to which the present invention is not limited. The present invention can widely be applied to the case of data transmission and reception by non-contact using, for example, capacity connect and also the case of data transmission and reception via terminals.

In the above described embodiments, the recording of a voice in the photographic seal by the information recording apparatus was described, however, to which the present invention is not limited. For example, a photographic seal may be configured using a read-only memory.

In the above described embodiments, the recording of audio data in the memory of a photographic seal was described, however, to which the present invention is not limited. The present invention may be configured such that still image data, dynamic image data, text data, position data obtained from the GPS or suchlike may be recorded. For the still image data, the image with the resolution of 640 dots by 480 dots is compressed at data compression ratio of 1/10 into 3.84K byte data amount. For the dynamic image data, the data with the resolution of 640 dots by 480 dots is compressed at data compression ratio of 1/10 into 0.115M byte data amount with the data recorded for 30 seconds. The necessary capacity of the memory of a photographic seal must therefore be prepared.

In the above described embodiments, the configuration of a photographic seal by only one side of an IC card was described, however, to which the present invention is not limited. Both sides of the IC card may be used to display an image.

In the above described embodiments, the application of the present invention to 2 cm by 3 cm small photographic image display was described, however, to which the present invention is not limited. The present invention can widely be applied to the display of photographic images having various sizes.

In the above described embodiments, the creation of a photographic seal by obtaining the voice and the image of an object with the information recording apparatus was described, however, to which the present invention is not limited. The present invention can widely be applied to, for example, the recording of the image and voice obtained with a electronic still camera or suchlike, or the image and voice obtained with various kinds of image sensing means and voice obtaining means in a photographic seal mount using a personal computer or the recording of an image obtained from a 35-mm silver salt photograph film.

In the above described embodiments, the indication of an image in the photographic seal mount directly by printing was described, however, to which the present invention is not limited. For example, such a configuration may be considered that an image is printed on another seal mount and the seal is pasted on a photographic seal mount.

## Claims

1. An information reproducing system for reproducing information recorded in memory-built-in sheet-shaped information recording medium by a specific reproducing apparatus,
said information recording medium comprising:
photographic image displayed on the surface;
medium-side antenna for receiving control commands to be transmitted by said information reproducing apparatus; and
medium-side processing circuit for transmitting information accompanying said photographic image recorded in said memory through said medium-side antenna according to said control commands received through said medium-side antenna,
and said information reproducing apparatus comprising:
reproducing-side antenna for transmitting said control commands to said information recording medium and receiving information accompanying said photographic image transmitted from said information recording medium;
reproducing-side processing circuit for processing information accompanying said photographic image received through said reproducing-side antenna; and
information output means for outputting information accompanying said photographic image processed by said reproducing-side processing circuit.

2. A memory-built-in sheet-shaped information recording medium capable of reproducing information recorded in said memory by specific information reproducing apparatus, comprising:
an image display area to display a photographic image on the surface of said information recording medium;
medium-side antenna for receiving the control commands transmitted by said information reproducing apparatus;
medium-side processing circuit for transmitting, from said medium-side antenna, the information accompanying said photographic image recorded in said memory according to the control commands received through said medium-side antenna.

3. An information reproducing system as claimed in claim 1, wherein:
said information accompanying the photographic image is audio information,
said information reproducing apparatus comprises positioning means for setting a position relative to said information recording medium, and
said information output means is a speaker for outputting said audio information with voice.

4. An information recording system for recording information in memory-built-in sheet-shaped information recording medium by specific information recording apparatus,
said information recording medium comprising:
an image display area to display a photographic image on the surface of said information recording medium;
medium-side antenna for receiving the control commands transmitted by said information reproducing apparatus;
medium-side processing circuit for recording the information received through said medium-side antenna in said memory according to the control commands received through said medium-side antenna,
and said information recording apparatus comprising:
image obtaining means for obtaining said photographic image to be displayed in said image display area;
image display means for displaying said photographic image obtained through said image obtaining means;
information obtaining means for obtaining information accompanying said photographic image; and
apparatus-side antenna for transmitting information accompanying said control commands and said photographic image to said information recording medium.

5. An information recording system as claimed in claim 4, wherein:
information accompanying said photographic information is audio information,
said image obtaining means is image sensing means for sensing the image of a specific object, and
said information obtaining means is audio information obtaining means for obtaining said audio information from said object.
